(19) Europäisches Patentamt
European Patent Office
Office européen des brevets

(11) EP 2 980 109 A1

(12) **EUROPEAN PATENT APPLICATION**
published in accordance with Art. 153(4) EPC

(43) Date of publication:
**03.02.2016 Bulletin 2016/05**

(21) Application number: **14775433.7**

(22) Date of filing: **25.03.2014**

(51) Int Cl.:
***C08F 257/00*** *(2006.01)* ***C08F 2/44*** *(2006.01)*
***C08J 9/18*** *(2006.01)*

(86) International application number:
**PCT/JP2014/058251**

(87) International publication number:
**WO 2014/157188 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.03.2013 JP 2013067039**

(71) Applicant: **Sekisui Plastics Co., Ltd.**
**Osaka-shi, Osaka 530-0047 (JP)**

(72) Inventors:
- **TERASAKI, Shingo**
**Koka-shi**
**Shiga 528-0056 (JP)**
- **MORISHIMA, Naoya**
**Koka-shi**
**Shiga 528-0056 (JP)**

(74) Representative: **Hoffmann Eitle**
**Patent- und Rechtsanwälte PartmbB**
**Arabellastraße 30**
**81925 München (DE)**

(54) **MODIFIED POLYSTYRENE-BASED CROSSLINKED RESIN PARTICLES AND PROCESS FOR PRODUCING SAME, EXPANDABLE PARTICLES AND PROCESS FOR PRODUCING SAME, PRE-EXPANDED BEADS, AND FOAMED MOLDED OBJECT**

(57) Modified polystyrene cross-linked resin particles in which polyacrylic acid ester-based resin fine particles having an average particle diameter in the range of 30 to 1,000 nm are dispersed in polystyrene-based resin particles, wherein the content of gel component fraction insoluble to toluene when about 1 g of the modified polystyrene-based cross-linked resin particles is dissolved in 50 ml of toluene at 25°C is in the range of from 5 to 25% and the gel component shows a degree of swelling in the range of from 10 to 20 in toluene at 25°C.

Figure 1

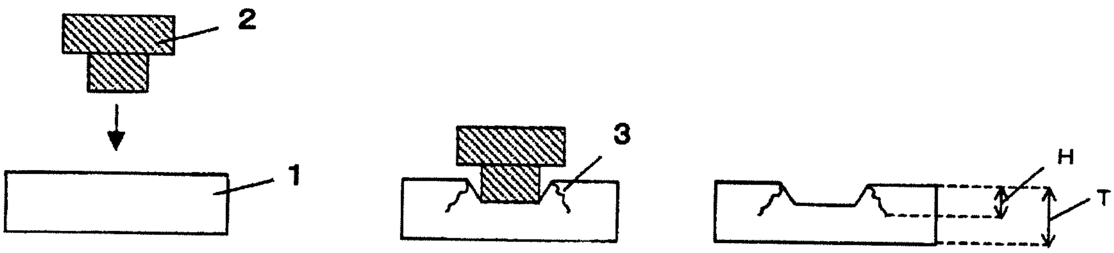


EP 2 980 109 A1

## Description

### TECHNICAL FIELD

The present invention relates to modified polystyrene (polystyrene-based cross-linked) resin particles and a manufacturing method therefor (method for producing the same), expandable particles and a manufacturing method therefor (method for producing the same), pre-expanded particles, and an expanded molded article. In accordance with the present invention, polystyrene-based resin particles that can yield an expanded molded article having superior impact resistance and that have good moldability can be provided.

### BACKGROUND TECHNOLOGY

Expanded molded articles comprising a polystyrene-based resin are diversely used as packaging materials and thermal insulation materials since they have superior cushioning and thermal insulation properties, as well as are easily molded. However, since impact resistance and resilience are insufficient, and thus cracks and chips easily form, there is the problem that such are not applicable to the packaging and the like of, for example, precision measuring equipment products.

On the other hand, although expanded molded articles comprising a polypropylene-based resin are expanded molded articles having superior impact resistance and resilience, extensive equipment and facilities are required at the time of molding such. Also, due to the nature of the resin, such must be transported from the raw material manufacturer to the molder in the form of expanded particles. For this reason, it becomes transportation of bulky materials, thus causing the problem of increased production costs.

In recent years, expanded molded articles, using rubber-modified styrene-based resin, that is, expanded molded articles made of a polystyrene resin in which an elastic component such as butadiene rubber is formulated have been suggested where impact resistance and resilience as well as moldability are improved, compared with those comprising a polystyrene-based resin.

For example, PCT International Publication No. WO 2012/043792 (Patent Document 1) discloses that polystyrene-based resin particles which can yield an expanded molded article having excellent impact resistance and which have good moldability can be obtained by having polyacrylic acid ester-based resin fine particles present in the inner area of polystyrene-based resin particles, instead of having them dispersed throughout the entirety of the polystyrene-based resin particles; in other words, the part in which the polyacrylic acid ester-based resin fine particles are dispersed is covered either by polystyrene-based resin having polyacrylic acid ester-based resin fine particles present in an amount less than part in which the polyacrylic acid ester-based resin fine particles are dispersed or by polystyrene-based resin having no polyacrylic acid ester-based resin fine particles present therein.

Also, PCT International Publication No. WO 2012/121084 (Patent Document 2) discloses composite polystyrene-based resin expanded particles having a plurality of cells and cell membranes separating the plurality of cells, the cell membranes including a polystyrene-based resin forming a continuous phase and polyacrylic acid alkyl ester-based resin fine particles dispersed in said continuous phase to form a dispersed phase, and being composite polystyrene-based resin expanded particles in which the polystyrene-based resin is complexed with the polyacrylic acid alkyl ester-based resin fine particles, that is, has the continuous phase of a polystyrene-based resin and a dispersed phase comprising polyacrylic acid alkyl ester-based resin particles dispersed in the continuous phase, wherein the dispersed phase is present in the form of a plurality of layers in the cell membrane thickness direction in the cell membrane cross-section of the composite polystyrene-based resin expanded particles.

Furthermore, Japanese Unexamined Patent Application, First Publication No. 2011-68817 (Patent Document 3) discloses polystyrene-based resin particles in which polyacrylic acid ester fine particles are dispersed in a polystyrene-based resin, and these resin particles can yield expandable polystyrene-based resin particles having good moldability and an expanded molded article having superior impact resistance.

Moreover, Japanese Patent No. 3462775 (Patent Document 4) discloses an expanded molded article of a rubber-modified styrene-based resin composition in which particles of a diene-based rubber encapsulating a polystyrene-based resin are dispersed in a continuous phase comprising a polystyrene-based resin, wherein the cis bond fraction of the diene-based rubber is 80% or more, and the expanded molded article formed by expansion molding using expandable resin particles containing a blowing agent in a rubber-modified styrene-based resin composition in which (i) the limiting viscosity number $\eta$ in the toluene-soluble portion is 0.5 to 0.7; (ii) the degree of swelling in toluene at 25°C of the toluene-insoluble portion is 14 to 20; and (iii) the gel component fraction is 15 to 27% by mass has a density of 0.014 to 0.05 g/cm$^3$, an average cell diameter of 100 to 200 $\mu$m, and a closed cell rate of 70% or more.

However, polystyrene-based resin particles that can yield an expanded molded article having more superior impact resistance and that have good moldability are desired.

PRIOR ART DOCUMENTS

Patent Documents

Patent Document 1: PCT International Publication No. WO 2012/043792
Patent Document 2: PCT International Publication No. WO 2012/121084
Patent Document 3: Japanese Unexamined Patent Application, First Publication No. 2011-68817
Patent Document 4: Japanese Patent No. 3462775

SUMMARY OF THE INVENTION

PROBLEM TO BE SOLVED BY THE INVENTION

Thus, the present invention solved the aforementioned problem and has the object of providing polystyrene-based resin particles that can yield an expanded molded article having more superior impact resistance and that have good moldability, a method for producing the same, expandable polystyrene-based resin particles, pre-expanded particles, and an expanded molded article.

MEANS FOR SOLVING THE PROBLEM

The inventors and the like of the present invention, as a result of earnest research in order to achieve the aforementioned object, have found that by finely crosslinking the polyacrylic acid ester-based resin of modified polystyrene-based resin particles in which polyacrylic acid ester-based resin fine particles are dispersed and by setting in specific ranges the content of gel component fraction (insoluble to toluene) in the modified polystyrene-based cross-linked resin particles and the degree of swelling of such gel component in toluene at 25°C, which are indicators of the degree of crosslinking thereof, it was unexpectedly found that polystyrene-based resin particles which can yield an expanded molded article having more superior impact resistance and which have good moldability can be obtained, thus leading to the present invention.

In accordance with preliminary tests by the inventors of the present application and the like, the content of gel component fraction insoluble to toluene when about 1 g of the modified polystyrene-based cross-linked resin particles disclosed in Patent Document 1 is dissolved in 50 ml of toluene at 25°C is 4.9% by mass and such gel component shows a degree of swelling of 9.9 in toluene at 25°C, which are outside the ranges defined by the present invention.

Also, other patent documents including Patent Documents 2 to 4 do not examine the fraction and the degree of swelling of the gel component in order to improve the impact resistance of polystyrene-based resin particles modified by polyacrylic acid ester-based resin fine particles.

Therefore, in accordance with the present invention, modified polystyrene-based cross-linked resin particles in which polyacrylic acid ester-based resin fine particles having an average particle diameter in the range of 30 to 1,000 nm are dispersed in polystyrene-based resin particles, wherein the content of gel component fraction insoluble to toluene when about 1 g of the modified polystyrene-based cross-linked resin particles is dissolved in 50 ml of toluene at 25°C is in the range of from 5 to 25% by mass, and the gel component shows a degree of swelling in the range of from 10 to 20 in toluene at 25°C are provided.

Also, in accordance with the present invention, expandable resin particles comprising the aforementioned modified polystyrene-based cross-linked resin particles and a volatile blowing agent are provided.

Furthermore, in accordance with the present invention, pre-expanded particles obtained by pre-expanding the aforementioned expandable particles are provided.

Also, in accordance with the present invention, an expanded molded article that is obtained by expansion molding the aforementioned pre-expanded particles, and that has a density in the range of from 0.014 to 0.20 g/$cm^3$ and an average cell diameter in the range of from 50 to 200 $\mu$m is provided.

Furthermore, in accordance with the present invention, a method for producing the aforementioned modified polystyrene-based cross-linked resin particles, the method comprising:

a step of, in an aqueous medium, after absorbing at least an acrylic acid ester-based monomer and a crosslinking agent into seed particles comprising a polystyrene-based resin, polymerizing the acrylic acid ester-based monomer to dispersion mold polyacrylic acid ester-based resin fine particles in the seed particles; and subsequently,
a step of, in the aqueous medium, after absorbing at least a styrene-based monomer into the particles in which the polyacrylic acid ester-based resin fine particles have been dispersion molded, polymerizing the styrene-based monomer to grow polystyrene-based cross-linked resin particles further

is provided.

Also, in accordance with the present invention, a method for producing the aforementioned expandable particles, the method comprising:

a step of, in an aqueous medium, after absorbing at least an acrylic acid ester-based monomer and a crosslinking agent into seed particles comprising a polystyrene-based resin, polymerizing the acrylic acid ester-based monomer to dispersion mold polyacrylic acid ester-based resin fine particles in the seed particles; subsequently
a step of, in the aqueous medium, after absorbing at least a styrene-based monomer into the particles in which the polyacrylic acid ester-based resin fine particles have been dispersion molded, polymerizing the styrene-based monomer to grow polystyrene-based cross-linked resin particles further; and
a step of impregnating a volatile blowing agent into the polystyrene-based cross-linked resin particles before or during the step of growing the polystyrene-based resin particles further

is provided.

EFFECTS OF THE INVENTION

In accordance with the present invention, polystyrene-based resin particles that can yield an expanded molded article having more superior impact resistance and that have good moldability, a production method thereof, expandable polystyrene-based resin particles, pre-expanded particles, and an expanded molded article can be provided.

Also, the modified polystyrene-based cross-linked resin particles of the present invention further exhibit the aforementioned superior effects when any one of the following conditions is satisfied:

(1) the modified polystyrene-based cross-linked resin particles include a component derived from a crosslinking agent, and the crosslinking agent is an aliphatic di- or trimethacrylate;
(2) the crosslinking agent is ethylene glycol dimethacrylate or trimethylol propane trimethacrylate;
(3) the component derived from a crosslinking agent is included in the range of 1 to 10 parts by mass with respect to 100 parts by mass of the polyacrylic acid ester-based resin fine particles;
(4) the content of gel component fraction insoluble to toluene is in the range of 10 to 25% by mass, and the gel component shows a degree of swelling in the range of 15 to 20 in toluene at 25°C;
(5) the polyacrylic acid ester-based resin fine particles are molded from a polymer of ethyl acrylate, butyl acrylate, 2-ethylhexyl acrylate, or a mixture thereof; and
(6) the polyacrylic acid ester-based resin fine particles have an average particle diameter in the range of 200 to 500 nm.

Furthermore, in the expandable particles, by the volatile blowing agent being a volatile blowing agent having pentane as the main component, and by the content thereof being in the range of 2 to 10% by mass with respect to the expandable particles, the aforementioned superior effects are further exhibited.

Also, by further including a hydroxy fatty acid amide as an ageing accelerant in the expandable particles, by the hydroxy fatty acid amide further being 12-hydroxystearic acid amide, and by the hydroxy fatty acid amide further being included in a proportion of 0.01 to 0.50 parts by mass with respect to 100 parts by mass of the resin component of the modified polystyrene-based cross-linked resin particles, the aforementioned superior effects are further exhibited.

Also, in accordance with the production method of the modified polystyrene-based cross-linked resin particles and the production method of the expandable particles of the present invention, modified polystyrene-based cross-linked resin particles and expandable particles for which production of an expanded molded article superior in all of mechanical strength, moldability, and impact resistance like mentioned above is possible can be produced efficiently and at low cost.

BRIEF DESCRIPTION OF THE DRAWINGS

Figure 1 is a schematic drawing for explaining the measurement method of the cracking amount of the expanded molded article.

BEST MODE FOR CARRYING OUT THE INVENTION

(1) Modified Polystyrene-Based Cross-linked Resin Particles

The modified polystyrene-based cross-linked resin particles (hereinafter, also referred to as "modified cross-linked particles") of the present invention are characterized by being modified polystyrene-based cross-linked resin particles with polyacrylic acid ester-based resin fine particles having an average particle diameter in the range of from 30 to 1,000 nm dispersed in polystyrene-based resin particles, wherein the content of gel component fraction insoluble to toluene when about 1 g of the modified polystyrene-based cross-linked resin particles is dissolved in 50 ml of toluene at 25°C is in the range of from 5 to 25% by mass and the gel fraction shows a degree of swelling in the range of from 10 to 20 in toluene at 25°C.

(a) Crosslinking

It is considered that the effects of the present invention are exhibited by the modified cross-linked particles of the present invention being particles in which the dispersed polyacrylic acid ester-based resin fine particles are finely cross-linked, in other words, partially cross-linked.

Also, the state of this fine crosslinking, in other words, the degree of crosslinking can be specified by the content of gel component fraction insoluble to toluene when about 1 g of the modified polystyrene-based cross-linked resin particles is dissolved in 50 ml of toluene at 25°C and the degree of swelling of such gel component in toluene at 25°C.

(a-1) Gel Component Fraction in Modified Cross-linked Particles

The content of gel component fraction insoluble to toluene when about 1 g of the modified polystyrene-based cross-linked resin particles of the present invention is dissolved in 50 ml of toluene at 25°C is in the range of from 5 to 25% by mass.

If the gel component fraction is less than 5% by mass, the impact resistance of the expanded molded article becomes low, and thus the impact resistance may not be sufficient as a cushioning material.

On the other hand, if the gel component fraction exceeds 25% by mass, processing properties such as expandability and moldability deteriorate, and thus a highly expanded molded article or a molded article with a good appearance may not be obtained.

The aforementioned gel component fraction is, for example, 5, 6, 7, 8, 9, 10, 11, 12, 13, 14, 15, 16, 17, 18, 19, 20, 21, 22, 23, 24, and 25% by mass.

A preferable minimum of the gel component fraction is 8% by mass, and a more preferable minimum is 10% by mass. On the other hand, a preferable maximum of the gel component fraction is 20% by mass, and a more preferable maximum is 18% by mass. Accordingly, a preferable range of the gel component fraction is, for example, 10 to 25% by mass.

The measurement method of the gel component fraction is describe in detail in "Examples".

(a-2) Degree of Swelling of Gel Component of Modified Cross-linked Particles

The degree of swelling in toluene at 25°C of the gel component of the modified cross-linked particles of the present invention is in the range of from 10 to 20.

If the degree of swelling of the gel component in less than 10, the degree of crosslinking of the polyacrylic acid ester-based resin fine particles becomes excessive and the resilience of the expanded molded article deteriorates, and thus the impact resistance thereof may not be sufficient.

On the other hand, if the degree of swelling of the gel component exceeds 20, the degree of crosslinking of the polyacrylic acid ester-based resin fine particles is insufficient, and thus the impact resistance of the expanded molded article may deteriorate.

The aforementioned degree of swelling of the gel component is, for example, 10, 11, 12, 13, 14, 15, 16, 17, 18, 19, and 20.

A preferable minimum of the degree of swelling of the gel component is 11, and a more preferable minimum is 15. On the other hand, a preferable maximum of the degree of swelling of the gel component is 18, and a more preferable maximum is 16. Accordingly, a preferable range of the degree of swelling of the gel component is, for example, 15 to 20.

The measurement method of the degree of swelling of the gel component is describe in detail in "Examples".

(a-3) Component Derived From Crosslinking Agent

The modified cross-linked particles of the present invention, include a component derived from a crosslinking agent. Such crosslinking agent is preferably an aliphatic di- or tri(meth)acrylate, and is particularly preferably an aliphatic di- or trimethacrylate.

As aliphatic di- or tri(meth)acrylates, for example, ethylene glycol di(meth)acrylate, diethylene glycol di(meth)acrylate, triethylene glycol di(meth)acrylate, polyethylene glycol di(meth)acrylate, 1,4-butanediol di(meth)acrylate, neopentylglycol di(meth)acrylate, 1,6-hexanediol di(meth)acrylate, 1,9-nonanediol di(meth)acrylate, trimethyolpropane tri(meth)acrylate, and the like can be mentioned. Herein, "(meth)acryl" means "acryl" or "methacryl".

As the aforementioned polyethylene glycol dimethacrylate, dimethacrylates in which the repetitive number (exponent n in the chemical structure formula) of the ethylene glycol is, for example, about 4, about 9, and about 14 can be mentioned. These, for example, are commercially available as the product names: LIGHT ESTER 4EG (PEG#200 dimethacrylate), LIGHT ESTER 9EG (PEG#400 dimethacrylate), and LIGHT ESTER 14EG (PEG#600 dimethacrylate) by Kyoeisha Chemical Co., Ltd.

In the present invention, one of the aforementioned crosslinking agents can be used alone or two or more thereof may be combined.

The molecular weight of the crosslinking agent is about 150 to 1,000.

If the molecular weight of the crosslinking agent is less than 150, the degree of crosslinking of the polyacrylic acid ester-based resin fine particles becomes excessive and the resilience of the expanded molded article deteriorates, and thus the impact resistance thereof may not be sufficient.

On the other hand, if the molecular weight of crosslinking agent exceeds 1,000, the degree of crosslinking of the polyacrylic acid ester-based resin fine particles is insufficient, and thus the impact resistance of the expanded molded article may deteriorate.

The aforementioned molecular weight of the crosslinking agent is, for example, 150, 160, 170, 180, 190, 200, 250, 300, 350, 400, 450, 500, 550, 600, 650, 700, 750, 800, 850, 900, and 1,000.

The molecular weight of the crosslinking agent is preferably in the range of from 180 to 600, and more preferably in the range of from 190 to 350.

From that mentioned above, in the present invention, among the aforementioned crosslinking agents, ethylene glycol dimethacrylate or trimethylol propane trimethacrylate is particularly preferable on the point of the molecular weight being in the more preferable range of 190 to 350.

The component derived from the crosslinking agent in the modified cross-linked particles of the present invention is preferably included in the range of from 1 to 10 parts by mass with respect to 100 parts by mass of the polyacrylic acid ester-based resin fine particles.

If the component derived from the crosslinking agent is less than 1 part by mass with respect to 100 parts by mass of the polyacrylic acid ester-based resin fine particles, the degree of crosslinking of the polyacrylic acid ester-based resin fine particles is insufficient, and thus the impact resistance of the expanded molded article may deteriorate.

On the other hand, if the component derived from the crosslinking agent exceeds 10 parts by mass with respect to 100 parts by mass of the polyacrylic acid ester-based resin fine particles, the degree of crosslinking of the polyacrylic acid ester-based resin fine particles becomes excessive, and thus productivity of the modified styrene-based particles may deteriorate.

The aforementioned component derived from the crosslinking agent is, for example, 1, 2, 3, 4, 5, 6, 7, 8, 9, and 10 parts by mass with respect to 100 parts by mass of the polyacrylic acid ester-based resin fine particles.

The component derived from the crosslinking agent is preferably in the range of from 2 to 8 parts by mass with respect to 100 parts by mass of the polyacrylic acid ester-based resin fine particles, and more preferably in the range of 3 to 6 parts by mass.

(b) Polystyrene-Based Resin Particles

There are no particular limitations on the polystyrene-based resin constituting the polystyrene-based resin particles so long as such is a resin having a styrene-based monomer as the main component, and styrene or a styrene derivative alone or as a copolymer can be mentioned.

As styrene derivatives, α-methylstyrene, vinyl toluene, chlorostyrene, ethylstyrene, isopropylstyrene, dimethylstyrene, bromostyrene, and the like can be mentioned. These styrene-based monomers may be used alone or may be combined.

The polystyrene-based resin may be a resin that is combined with a vinyl-based monomer copolymerizable with a styrene-based monomer.

As vinyl-based monomers, for example, multifunctional monomers such as divinylbenzenes such as o-divinylbenzene, m-divinylbenzene, and p-divinylbenzene, and alkylene glycol di(meth)acrylates such as ethylene glycol di(meth)acrylate and polyethylene glycol di(meth)acrylate; (meth)acrylonitrile; methyl (meth)acrylate; butyl (meth)acrylate; and the like can be mentioned. Among these, multifunctional monomers are preferable, ethylene glycol di(meth)acrylate, polyethylene glycol di(meth)acrylates in which the number of ethylene units is 4 to 16, and divinylbenzenes are more preferable, and divinylbenzenes and ethylene glycol di(meth)acrylate are particularly preferable. The monomers may be used alone or may be combined.

Also, when monomers are combined, it is preferable that the content thereof is set so that the styrene-based

monomer is an amount so as to become the main component (for example, 50% by mass or more).

In the present invention, "(meth)acryl" means "acryl" or "methacryl".

(c) Polyacrylic Acid Ester-Based Resin Fine Particles

There are no particular limitations on the polyacrylic acid ester-based resin constituting the fine particles so long as such is a resin having an acrylic acid ester-based monomer as the main component. For example, methyl acrylate, ethyl acrylate, propyl acrylate, butyl acrylate, pentyl acrylate, 2-ethylhexyl acrylate, hexyl acrylate, and the like can be mentioned. Among these, ethyl acrylate, butyl acrylate, and 2-ethylhexyl acrylate are preferable. These acrylic acid ester-based monomers may be used alone or may be combined.

Accordingly, the fine particles are preferably formed from a polymer of ethyl acrylate, butyl acrylate, 2-ethylhexyl acrylate, or a mixture of thereof.

The polyacrylic acid ester-based resin fine particles have an average particle diameter in the range of from 30 to 1,000 nm.

If the average particle diameter of the polyacrylic acid ester-based resin fine particles is less than 30 nm, the impact resistance of the obtained polystyrene-based resin expanded molded article may become insufficient. On the other hand, if the average particle diameter of the polyacrylic acid ester-based resin fine particles exceeds 1,000 nm, the dissipation rate of the blowing agent may increase.

The aforementioned average particle diameter is, for example, 30, 50, 100, 150, 200, 250, 300, 325, 350, 375, 400, 425, 450, 475, 500, 750, and 1,000 nm, is preferably in the range of from 120 to 700 nm, is more preferably in the range of from 150 to 600 nm, and even more preferably in the range of 200 to 500 nm.

(d) Polybutadiene-Terminated Acrylate

The modified cross-linked particles may include a component derived from a polybutadiene-terminated acrylate.

A monomer having a structure in which one or more (meth)acryloyl groups are bonded to polybutadiene molecules containing 80% or more 1,2-bonds and 1,4-bonds can be used for the polybutadiene-terminated acrylate. This monomer preferably has a structure in which a meth(acryloyl) group is introduced to a polybutadiene molecule terminal. Specifically, the polybutadiene-terminated acrylate is a monomer having polybutadiene molecules containing the below-mentioned repetitive unit (1) by 1,2-bonding and the below-mentioned repetitive unit (2) by 1,4-bonding, and a functional group ((meth)acryloyl group) represented by formula (3) below at one or both terminals of the polybutadiene molecules.

[Formula 1]

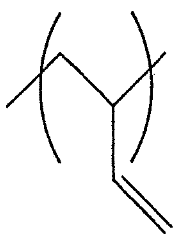
(1)

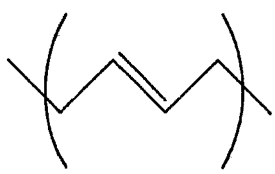
(2)

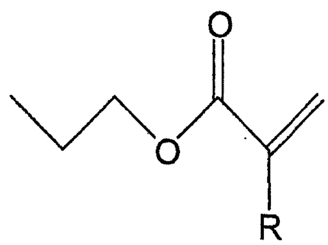
(3)

The molar ratio of units (1) and (2) is preferably $(1)/[(1)+(2)] \geq 0.8$. Unit (2) may have a trans-structure or may have a cis-structure. Also, the units (1) and (2) can exist in various repetitive forms, such as random, block, and alternate, in the monomer.

In formula (3), R is preferably a hydrogen atom or a lower alkyl group having 1 to 4 carbons. The functional group of formula (3) is preferably positioned at both terminals of a polybutadiene molecule.

As the polybutadiene-terminated acrylate, for example, the product names BAC-45 and BAC-15, acquirable from Osaka Organic Chemical Industry Ltd., and the like can be used. Also, a newly synthesized product by the known method below can also be used.

That is, a method of introducing a (meth)acryl group into a polybutadiene structure by reacting a hydroxyl group-containing polybutadiene and a compound having a (meth)acryl group can by mentioned.

As the aforementioned method, for example, (i) a method of carrying out a dehydration reaction with the hydroxyl group of the hydroxyl group-containing polybutadiene and the carboxyl group of the compound having a (meth)acryl group using a dehydration catalyst such as p-toluenesulfonic acid, and (ii) a method of carrying out a transesterification reaction with a (meth)acrylic acid ester and the hydroxyl group of the polybutadiene using a transesterification catalyst such as a titanium catalyst or a tin catalyst can be mentioned.

As compounds having a (meth)acryl group, for example, (meth)acrylic acid, methyl (meth)acrylate, ethyl (meth)acrylate, propyl (meth)acrylate, butyl (meth)acrylate, and the like can be mentioned (propyl and butyl include structural isomers).

The polybutadiene-terminated acrylate preferably has a number-average molecular weight in the range of from 200 to 15,000. If the number-average molecular weight is smaller than 200, elasticity of the modified cross-linked particles may decrease. If the number-average molecular weight is larger than 15,000, charging and dissolving in the reaction system may be difficult. Such number-average molecular weight is, for example, 200, 1,000, 1,500, 2,000, 2,500, 3,000, 3,500, 5,000, and 10,000. A more preferable number-average molecular weight is in the range of from 2,500 to 10,000. Number-average molecular weight as used herein is the value obtained by measuring with a gel permeation chromatograph.

The polybutadiene-terminated acrylate preferably has a viscosity (25°C) in the range of from 500 to 9,000 Pa·s. If the viscosity is smaller than 500 Pa·s, elasticity of the modified cross-linked particles may decrease. If the viscosity is larger than 9,000 Pa·s, charging and dissolving in the reaction system may be difficult. Such viscosity is, for example, 500, 1,000, 2,000, 3,000, 4,000, 5,000, 6,000, 7,000, 8,000, and 9,000 Pa·s. A more preferable viscosity is in the range of from 4,000 to 8,000 Pa·s. Viscosity as used herein is the value obtained by measuring with a rotational viscometer.

The component derived from a polybutadiene-terminated acrylate is preferably included in the modified cross-linked particles in the range of from 0.1 to 3 parts by mass with respect to a total of 100 parts by mass of the polystyrene-based resin and the polyacrylic acid ester-based resin constituting the modified cross-linked particles. If the content of this component is smaller than 0.1 parts by mass, elasticity of the composite modified cross-linked particles may decrease. If the content of this component is more than 3 parts by mass, absorption into the modified cross-linked particles may become difficult. The content of such component derived from a polybutadiene-terminated acrylate is, for example, 0.1, 0.3, 0.5, 0.8, 1.0, 1.5, 2.0, and 3.0 parts by mass with respect to 100 parts by mass of the modifiedpolystyrene-based cross-linked resin particles and is more preferably in the range from 0.5 to 1 parts by mass.

(2) Production Method of Modified Polystyrene-Based Cross-Linked Resin Particles

The production method of the modified polystyrene-based cross-linked resin particles, for example, includes:

a first polymerization step in which, in a dispersion in which seed particles comprising a polystyrene-based resin are dispersed in water, 10 to 90 parts by mass of an acrylic acid ester-based monomer with respect to 100 parts by mass of the seed particles comprising a polystyrene-based resin and 1 to 10 parts by mass of a crosslinking agent with respect to 100 parts by mass of the acrylic acid ester-based monomer are supplied, and these acrylic acid ester-based monomer and crosslinking agent are absorbed into the seed particles and polymerized to grow polystyrene-based resin particles; and then subsequently

a second polymerization step in which a styrene-based monomer is supplied to this dispersion, and such is absorbed into the particles and polymerized to grow polystyrene-based resin particles further.

The aforementioned polymerization of the monomer can be carried out, for example, by heating at 60 to 150°C for 2 to 40 hours. The polymerization can be carried out after the monomer is absorbed into the seed particles or while the monomer is absorbed into the seed particles. In addition, the amounts of the monomer and the resin are roughly equal.

Also, the second polymerization step, in other words, supply of the styrene-based monomer to the reaction solution including particles, absorption of the styrene-based monomer into the particles, and polymerization thereof, may be repeated multiple times.

Also, the below-mentioned expandable particles can be obtained by carrying out a step of impregnating a blowing agent after the modified cross-linked particles have been obtained by carrying out the second polymerization step or during the growth of the modified cross-linked particles.

As acrylic acid ester-based monomers used in the first polymerization step, those exemplified in the section "Polyacrylic Acid Ester-Based Resin Fine Particles" can be mentioned.

The used amount thereof is normally in the range of from 10 to 90 parts by mass with respect to 100 parts by mass of the seed particles.

If the amount of the acrylic acid ester-based monomer is less than 10 parts by mass, the effect of improvement in the impact resistance of the obtained expanded molded article may not be sufficiently achieved. On the other hand,

if the amount of the acrylic acid ester-based monomer exceeds 90 parts by mass, the acrylic acid ester-based monomer cannot be sufficiently absorbed into the seed particles and hompolymerizes in the dispersion, and, as a result, a large amount of polyacrylic acid ester-based resin fine particles that do not disperse in the polystyrene-based resin particles may form.

The aforementioned amount of the acrylic acid ester-based monomer with respect to 100 parts by mass of the seed particles is, for example, 10, 20, 30, 40, 50, 60, 70, 80, and 90 parts by mass, and preferably in the range of from 20 to 80 parts by mass.

If the modified cross-linked particles include a component derived from a polybutadiene-terminated acrylate, the polybutadiene-terminated acrylate can be included in the modified cross-linked particles by absorbing and polymerizing together with the acrylic acid ester-based monomer.

As styrene-based monomers used in the second polymerization step, those exemplified in the section "Polystyrene-Based Resin Particles" can be mentioned.

(a) Seed Particles

There are no particular limitations on the seed particles comprising a polystyrene-based resin and can be produced by a publicly-known method. For example, suspension polymerization methods, and methods of, after melting and kneading the raw material resin in an extruder, extruding as strand shapes and cutting to desired diameters, can be mentioned. Also, a polystyrene-based resin recycled product can be used in a part or all thereof, and the seed particles may be the particles obtained by the suspension polymerization method or the cutting method as is, or may be particles obtained by impregnating a styrene-based monomer in such particles and polymerizing in an aqueous medium.

The particle diameter of the seed particles can be appropriately adjusted according to the average particle diameter and the like of the modified cross-linked particles. For example, when modified cross-linked particles having an average particle diameter of 1 mm are produced, preferably seed particles having an average particle diameter of about from 0.4 to 0.7 mm are used.

Also, although there are no particular limitations on the weight-average molecular weight of the seed particles, from 150,000 to 700,000 is preferable, and from 200,000 to 500,000 is more preferable.

Furthermore, the aforementioned polybutadiene-terminated acrylate is preferably included in the seed particles.

(b) Polymerization Initiator

As the polymerization initiator used in the aforementioned production method, there are no particular limitations so long as such has been conventionally used in the polymerization of styrene-based monomers and, for example, organic peroxides such as benzoyl peroxide, lauryl peroxide, t-butyl peroxybenzoate, t-butyl peroxy-2-ethylhexanoate, t-butylperoxy-2-ethylhexyl monocarbonate, t-butyl peroxide, t-butyl peroxypivalate, t-butyl peroxyisopropylcarbonate, t-butyl peroxyacetate, 2,2-bis(t-butylperoxy)butane, t-butylperoxy-3,3,5-trimethylhexanoate, di-t-butylperoxyhexahydroterephthalate, 2,2-di-t-butylperoxybutane, di-t-hexylperoxide, and dicumyl peroxide; azo compounds such as azobisisobutyronitrile and azobisdimethylvaleronitrile; and the like can be mentioned. These may be used alone or in combination, but preferably multiple polymerization initiators whose decomposition temperature for obtaining a half-life of 10 hours is from 60 to 130°C are used in combination.

(c) Suspension Stabilizer

Furthermore, in the aforementioned production method, a suspension stabilizer may be used in order to stabilize dispersion of styrene-based monomer droplets and seed particles. As such suspension stabilizer, there are no particular limitations so long as such has been conventionally used in the suspension polymerization of styrene-based monomers and, for example, water-soluble polymers such as polyvinyl alcohol, methyl cellulose, polyacrylamide, and polyvinyl pyrrolidone; poorly-soluble inorganic compounds such as tribasic calcium phosphate and magnesium pyrophosphate; and the like can be mentioned.

Also, when a poorly-soluble inorganic compound is used, normally an anionic surfactant is combined.

As such anionic surfactant, for example, fatty acid soap; N-acylamino acids or salts thereof; carboxylates such as alkyl ether carboxylates; sulfonates such as alkyl benzene sulfonates, alkyl naphthalene sulfonates, dialkyl sulfosuccinic acid ester salts, alkyl sulfoacetates, and α-olefin sulfonates; sulfuric acid ester salts such as higher alcohol sulfuric acid ester salts, secondary higher alcohol sulfuric acid ester salts, alkyl ether sulfates, and polyoxyethylene alkyl phenyl ether sulfates; phosphoric acid ester salts such as alkyl ether phosphoric acid ester salts and alkyl phosphoric acid ester salts; and the like can be mentioned.

(d) Other Components

In a range that does not impair physical properties, additives such as plasticizers, binding inhibitors, cell regulators, crosslinking agents, fillers, flame retardants, flame retardant auxiliary agents, lubricants, coloring agents, and the like may be added to the modified cross-linked particles.

Also, powdered metal soaps such as zinc stearate may be coated on the surface of the after-mentioned expandable particles. By this coating, linking between pre-expanded particles can be reduced in the pre-expansion step of the expandable particles.

In the modified cross-linked particles, a plasticizer whose boiling point exceeds 200°C at 1 atm can be included in order to maintain good expansion moldability even if the pressure of the steam used at the time of heat expansion is low.

As plasticizers, for example, phthalic acid esters; glycerin fatty acid esters such glycerin diacetomonolaurate, glycerin tristearate, and glycerin diacetomonostearate; adipic acid esters such as diisobutyl adipate; coconut oil; and the like can be mentioned.

The content of the plasticizer in the modified cross-linked particles is less than 2% by mass.

(e) Modified Polystyrene-Based Cross-Linked Resin Particles

The modified polystyrene-based cross-linked resin particles are preferably spherical and the average particle size thereof, considering such as filling properties into the molding cavities of the polystyrene-based resin pre-expanded particles, is preferably from 0.3 to 2 mm. Such average particle diameter is, for example, 0.5, 0.6, 0.7, 0.8, 0.9, 1.0, 1.1, 1.2, 1.3, 1.4, and 1.5 mm, and is more preferably from 0.5 to 1.5 mm.

(3) Expandable Particles

The expandable particles including the modified cross-linked particles and a volatile blowing agent, and can be produced by impregnating the volatile blowing agent into the modified cross-linked particles by a publicly-known method.

Regarding the temperature for impregnating the volatile blowing agent into the modified cross-linked particles, if low, time is required for impregnation, and thus production efficiency of the expandable particles may decrease. On the other hand, if high, a large amount of cohesion between the expandable particles occurs. Thus, from 70 to 130°C is preferable, and from 80 to 120°C is more preferable.

(a) Blowing Agent

As the volatile blowing agent, there are no particular limitations so long as such has been conventionally used in the expansion of polystyrene-based resins. For example, volatile blowing agents such as aliphatic hydrocarbons having 5 or less carbons such as isobutane, n-butane, isopentane, n-pentane, and neopentane, can be mentioned. In particular, butane-based blowing agents and pentane-based blowing agents are preferable, and volatile blowing agents having pentane as the main component (for example, 50% by mass or more) are particularly preferable. It can be also expected that pentane will act as a plasticizer.

The content of the volatile blowing agent in the expandable particles is normally in the range of from 2 to 10% by mass. Such content of the volatile blowing agent is, for example, 2, 2.5, 3, 3.5, 4, 4.5, 5, 5.5, 6, 6.5, 7, 7.5, 8, 8.5, 9, 9.5, and 10% by mass, is preferably in the range of from 3 to 10% by mass, and is particularly preferably in the range of from 3 to 8% by mass.

If the content of the volatile blowing agent is low, for example, less than 2% by mass, obtaining a low-density expanded molded article from the expandable particles may not be possible and since an effect of increasing the secondary expansion force when expansion molding in the cavity also cannot be achieved, the appearance of the expanded molded article may deteriorate. On the other hand, if the content of the volatile blowing agent is high, for example, exceeds 10% by mass, the time required for the cooling step in the production process of an expanded molded article using expandable particles increases, and thus productivity may deteriorate.

(b) Blowing Auxiliary Agent

A blowing auxiliary agent may be included with the blowing agent in the expandable particles.

As the blowing auxiliary agent, there are no particular limitations so long as such has been conventionally used in the expansion of polystyrene-based resins. For example, aromatic organic compounds such as styrene, toluene, ethylbenzene, and xylene; cyclic aliphatic hydrocarbons such as cyclohexane and methylcyclohexane; and solvents having a boiling point of 200°C or less at 1 atm such as ethyl acetate and butyl acetate can be mentioned.

The content of the blowing auxiliary agent in the expandable particles is normally in the range of from 0.5 to 2.5% by mass. Such content of the volatile blowing auxiliary agent is, for example, 0.5, 1.0, 1.5, 2.0, and 2.5% by mass, and is preferably in the range of from 1 to 2% by mass.
If the content of the blowing auxiliary agent is low, for example, less than 0.5% by mass, the plasticization effect of the polystyrene-based resin may not be exhibited. On the other hand, if the content of the blowing auxiliary agent is high, for example, exceeds 2.5% by mass, the appearance may deteriorate by the occurrence of shrinkage and melting in the expanded molded article obtained by expanding expandable particles or the time required for the cooling step in the production process of the expanded molded article using expandable particles may increase.

(c) Ageing Accelerant

An ageing accelerant can be contained in the expandable particles in order to reduce the number of days of maturation.
A hydroxy fatty acid amide is used as the ageing accelerant.
The hydroxy fatty acid amide is not particularly limited so long as such has the functions of accelerating maturing and stabilizing cells, and a hydroxy higher fatty acid amide having a part derived from a fatty acid of 4 to 30 carbons is preferable. As specific ageing accelerants, 12-hydroxystearic acid amide, 12-hydroxystearic acid bisamide, and the like can be mentioned.
The hydroxy fatty acid amide is preferably included in a proportion of from 0.01 to 0.50 parts by mass with respect to 100 parts by mass of the resin component of the expandable particles. If the content is less than 0.01 parts by mass, the improvement effect of the maturing conditions may be small. On the other hand, if the content exceeds 0.50 parts by mass, the cells on the surface area of the expanded particles become too fine, and thus fusion properties at the time of molding may deteriorate. A preferable content is 0.05 to 0.30 parts by mass, and a more preferable content is 0.10 to 0.20 parts by mass.
In addition, the used amount of the hydroxy fatty acid amide at the time of production and the content in the expandable particles are roughly equal.

(4) Production Method of Expandable Particles

From that mentioned above, the production method of the expandable particles is characterized by including:

a step of, in an aqueous medium, after absorbing at least an acrylic acid ester-based monomer and a crosslinking agent into seed particles comprising a polystyrene-based resin, polymerizing the acrylic acid ester-based monomer to dispersion mold polyacrylic acid ester-based resin fine particles in the seed particles; subsequently
a step of, in the aqueous medium, after absorbing at least a styrene-based monomer into the particles in which the polyacrylic acid ester-based resin fine particles have been dispersion molded, polymerizing the styrene-based monomer to grow polystyrene-based cross-linked resin particles further; and
a step of impregnating a volatile blowing agent into the polystyrene-based cross-linked resin particles before or during the step of growing the polystyrene-based resin particles further.

That is, it is characterized by impregnating the volatile blowing agent after the modified cross-linked particles have been obtained by carrying out the step of growing polystyrene-based resin particles further or during growing these polystyrene-based resin particles. Also, when the volatile blowing agent is impregnated after the modified cross-linked particles have been obtained, after extracting the modified cross-linked particles from the aqueous medium used in the production of the modified cross-linked particles and subjecting to washing, dehydrating, and drying according to necessity, the volatile blowing agent can be impregnated into the modified cross-linked particles in a new aqueous medium. Also, without extracting the modified cross-linked particles from the aqueous medium used in the production of the modified cross-linked particles, the volatile blowing agent may be impregnated in this aqueous medium.

(5) Pre-Expanded Particles

The pre-expanded particles (hereinafter, also referred to as "expanded particles") can be obtained by pre-expanding expandable particles to a predetermined bulk density (for example, 0.01 to 0.30 g/$cm^3$) by a publicly-known method.
In the pre-expanded particles, air may be simultaneously fed with steam according to necessity when expanding.

(6) Expanded Molded Article

The expanded molded article can be obtained by a publicly-known method, for example, can be obtained by filling the pre-expanded particles into the molding cavities of a molding machine and then thermally fusing pre-expanded particles while expanding the pre-expanded particles by reheating.

The expanded molded article of the present invention has a density in the range of from 0.014 to 0.20 g/cm$^3$ and an average cell diameter in the range of 50 to 200 μm.

If the density of the expanded molded article is less than 0.014 g/cm$^3$, the cell membrane becomes thin and, as a result, impact resistance may deteriorate by the occurrence of cell rupturing.

On the other hand, if the density of the expanded molded article exceeds 0.20 g/cm$^3$, the weight of the expanded molded article increases, and thus may not be preferable since transportation costs increase.

The aforementioned density of the expanded molded article is, for example, 0.014, 0.020, 0.025, 0.030, 0.040, 0.050, 0.075, 0.10, 0.15, and 0.20 g/cm$^3$, and a preferable density of the expanded molded article is in the range of from 0.033 to 0.20 g/cm$^3$.

If the average particle diameter of the expanded molded article is less than 50 μm, the cell membrane becomes thin and, as a result, the closed cell rate may deteriorate and the impact resistance may deteriorate by the occurrence of cell rupturing.

On the other hand, if the average particle diameter of the expanded molded article exceeds 200 μm, smoothness of the molded article surface is lost, and thus the appearance may also worsen.

The aforementioned average particle diameter of the expanded molded article is, for example, 80, 85, 90, 95, 100, 105, 110, 115, and 120 μm, and a preferable average particle diameter of the expanded molded article is in the range of from 80 to 120 μm.

EXAMPLES

Although specific examples of the present invention are shown below by examples, the examples below are merely exemplifications of the present invention, and thus the present invention is not limited to these examples. Also, unless otherwise specified, "parts" and "%" below are on a mass basis.

In the examples and the comparative examples below, the degree of swelling of the gel component in toluene at 25°C, the insoluble gel component fraction with respect to toluene, the average particle diameter, and the average particle diameter of the polyacrylic acid ester-based resin particles were measured and evaluated by the following measurement methods and evaluation standards for the modified cross-linked particles; the bulk density, the molecular weight, and the average cell diameter were measured and evaluated by the following measurement methods and evaluation standards for the expanded particles; and the bulk density, the molecular weight, the falling ball impact value, the bending fracture point displacement, the cracking amount, and the moldability were measured and evaluated by the following measurement methods and evaluation standards for the expanded molded article. Also, for the expandable particles, the blowing agent content was measured.

<Degree of Swelling of Gel Component in Modified Cross-Linked Particles>

About 1.0 g (precise weight value W g) of modified cross-linked particles was inserted into a glass crucible with a volume of 80 ml and equipped with a lid, 50 ml of toluene at 25°C (sufficiently excess amount for dissolving 1 g of modified cross-linked particles) was further inserted thereinto, and the mixture was shaken at 25°C for 12 hours to dissolve the modified cross-linked particles in the toluene.

Next, the contents was transferred to a centrifuge tube of weight $W_0$ g, which was subsequently loaded into a centrifuge (manufactured by KUBOTA Corporation, product name: High Speed Refrigerated Centrifuge 7930) and the contents were centrifuged at 15°C or less and 10,000 rpm for 1 hour. Subsequently, the weight $W_1$ g of the contents in the centrifuge tube excluding the supernatant liquid was weighed.

Furthermore, the contents was air-dried at 25°C for 12 hours. After the thus obtained sediment was vacuum-dried for 20 hours by a vacuum drier (manufactured by Yamato Scientific Co., Ltd., product name: Rectangular Vacuum Constant Temperature Dryer DP33) under to conditions of 70°C and a gauge pressure of -0.06 MPa or less, the weight $W_2$ g after drying in the state of inserted in the centrifuge tube was weighed and the degree of swelling was calculated by the following equation.

$$\text{Degree of swelling} = (W_1 - W_0)/(W_2 - W_0)$$

<Gel Component Fraction in Modified Cross-Linked Particles>

Using the precise weight value W g of the modified cross-linked particles, and the weight values $W_0$ and $W_2$ in the aforementioned measurement of the degree of swelling, the gel component fraction was calculated by the following equation.

$$\text{Gel component fraction} = (W_2\text{-}W_0)/(W)\text{x}100$$

<Average Particle Diameter of Modified Cross-Linked Particles>

The average particle diameter is the value represented by $D_{50}$.

Specifically, using a Ro-Tap sieve shaker (manufactured by Iida Seisakusho), about 50 g of a sample was classified over 10 minutes with a JIS-standard sieve (JIS Z8801) having sieve openings of 4.00 mm, 3.35 mm, 2.80 mm, 2.36 mm, 2.00 mm, 1.70 mm, 1.40 mm, 1.18 mm, 1.00 mm, 0.85 mm, 0.71 mm, 0.60 mm, 0.50 mm, 0.425 mm, 0.355 mm, 0.300 mm, 0.250 mm, 0.212 mm, and 0.180 mm, and the weight of the sample on the mesh was measured. From the obtained result, a cumulative weight distribution curve was prepared and the particle diameter (median diameter) when the cumulative weight becomes 50% is the average particle diameter.

<Average Particle Diameter of Polyacrylic Acid Ester-Based Resin Fine Particles>

Particles were encapsulated within an epoxy resin and this epoxy resin including the resin particles piece was processed using an ultramicrotome (manufactured by Leica Microsystems GmbH, LEICA ULTRACUT UCT) to thereby produce an ultrathin piece. The surface thereof was stained with ruthenium tetroxide.

Subsequently, using the stained surface as the ultrathin piece, photographs of the ultrathin piece were taken with a transmission electron microscope (manufactured by Hitachi High-Technologies Corporation, H-7600) at 5,000 times magnification. The taken photographs were printed enlarged so as to become one image on an A4 sheet of paper. The long diameter and the short diameter of 30 rubbers (polyacrylic acid ester-based resin fine particles) arbitrarily selected in a range of 150 mm x 150 mm in the image were measured, these were averaged, and this was used as the average particle diameter per one fine particle. The obtained overall average particle diameter was calculated and used as the average particle diameter of the polyacrylic acid ester-based resin fine particles.

<Blowing Agent Content of Expandable Particles>

5 to 20 mg of the expandable particles was precisely weighed and used as the measurement sample.

The measurement sample was set in a pyrolyzer (manufactured by Shimadzu Corporation, PYR-1A) held at 180 to 200°C and after sealing the measurement sample, heated for 120 seconds to release the blowing agent component.

Subsequently, a chart of the blowing agent component was obtained using a gas chromatograph (manufactured by Shimadzu Corporation, GC-14B, detector: FID) from the released blowing agent component. The content of the blowing agent (gas content: % by mass) in the expandable particles was calculated from the obtained chart based on a calibration curve of the blowing agent component measured beforehand.

<Bulk Density and Bulk Expansion Ratio of Expanded Particles>

The bulk density and the bulk expansion ratio were measured as follows.

A weight (a) of about 5 g of expanded particles was weighed to two decimal places. The obtained expanded particles were placed in a 500 $cm^3$ measuring cylinder having a minimum memory unit of 5 $cm^3$. Next, a pressing tool composed of a circular resin plate having a diameter slightly smaller than the diameter of the measuring cylinder and a bar-like resin plate having a width of about 1.5 cm and a length of about 30 cm fixed upright to the center of the circular resin plate was abutted against the opening of the measuring cylinder so as to read a volume (b) of the expanded particles.

From the obtained weight (a) of expanded particles and volume (b) of expanded particles, the bulk density and the bulk expansion ratio were determined by the following equations.

$$\text{Bulk density of expanded particles (g/cm}^3\text{)} = (a)/(b)$$

Bulk expansion ratio of expanded particles (times) = 1/(bulk density of expanded particles)

<Molecular Weight of Expanded Particles>

Molecular weight means the polystyrene (PS)-converted average molecular weight measured using gel permeation chromatography (GPC) (internal standard method).

Expanded particles were divided in two so as to pass through the center thereof. 30 mg±3 mg of such expanded particles divided into two was dissolved in 4 mL of 0.1% by weight BHT (butylhydroxytoluene)-containing chloroform, the resultant solution was filtered with a non-aqueous-based 0.45 μm chromatodisc, and the obtained filtrate was measured using a chromatograph under the following conditions. The average molecular weight of the sample was determined from the calibration curve of standard polystyrene measured and created in advance.

- Measurement device: Tosoh HPLC (Pump: DP-8020, Autosampler: AS-8020, Detectors: UV-8020 and RI-8020)

- Column: GPC K-806L (ø8.0 x 300 mm, manufactured by Shodex) x 2

- Guard column: GPC K-LG (ø8.0 x 50 mm, manufactured by Shodex) x 1

- Number of tests: 2
- Measurement conditions: column temperature (40°C), mobile phase (chloroform), mobile phase flow rate (1.2 mL/min), pump temperature (room temperature), detector temperature (room temperature), measurement time (25 minutes), detection wavelength (UV 254 nm), injection amount (50 μL)
- Standard polystyrene for calibration curves: manufactured by Showa Denko K. K., Product name: "Shodex", weight-average molecular weight (Mw): 5,620,000, 3,120,000, 1,250,000, 442,000, 131,000, 54,000, 20,000, 7,590, 3,450, and 1,320

From the obtained weight-average molecular weight Mw and the Z-average molecular weight Mz was determined the ratio Mz/Mw thereof.

<Average Cell Diameter of Expanded Particles>

The average cell diameter of the expanded particles was measured as follows.

Specifically, a plane passing near the center of the expanded particles was cut with a razor blade and the cut cross-sections were photographed enlarged at a magnification of 100 times using a scanning electron microscope (manufactured by JEOL Ltd., model: JSM-6360LV). When photographing the images, images in which the surface area of the expanded particles is included and the images in which the central part of the expanded particles is included were photographed for 5 or more arbitrarily selected places.

The surface area of the expanded particles is referred to as the range of 50% of the radius from the outermost surface membrane and the central part of the expanded particles is referred to as the range of 50% of the radius from the center of the expanded particles.

Next, photographed images were printed on A4 sheets, one image per page, and one straight line 60 mm long was arbitrarily drawn on the images of the cut cross-section of the expanded particles. From the number of cells existing on this straight line, the average chord length (t) of cells was calculated by the following equation.

Average chord length t (μm) = (60 x 1,000)/(number of cells x photo magnification)

However, the arbitrarily straight line should be drawn such that the straight line and cells do not contact only at contact points wherever possible (if there are ones contacting only at contact points, the number thereof is included in the number of cells). Furthermore, when both ends of the straight line do not pass through cells and are in the state of being positioned inside cells, the cells in which both ends of the straight line are positioned are also included in the number of cells.

Then, an average cell diameter (D) is calculated by the following equation based on the calculated average chord length t.

$$\text{Average cell diameter D } (\mu m) = t/0.616$$

The average value of 5 images for each sample was used as the average cell diameter.

<Number of Days for Maturation of Expandable Particles>

The number of days for maturation of the expandable particles was evaluated as follows.

In expanded particles obtained by expanding expandable particles during maturation, cells are made finer from the surface area, and as maturation progresses, the making finer of the cells reaches the inner area and the entirety of the cells become fine uniform cells. Expandable particles stored in a constant temperature room at 13°C were pre-expanded to a bulk density of 0.025 g/$cm^3$, the average cell diameters of the surface area section and the inner area were measured by the below-mentioned methods. When the ratio thereof (surface area section average cell diameter/inner area average cell diameter) became 0.50 or more, it was considered that maturation was complete and the period necessary for doing so was used as the number of days of maturing.

In this method, the maturing completion time was measured in the unit days and the number of days until the completion of maturation was evaluated by the following determination standard.

Θ (superior): Number of days for completion of maturation is within 5 days
O (good): Number of days for completion of maturation is 6 days
Δ (acceptable): Number of days for completion of maturation is from 7 days to 9 days
x (unacceptable): Number of days for completion of maturation is 10 days or more

<Average Cell Diameter of Surface Area Section and Average Cell Diameter of Inner Area of Expanded Particles>

Similar to the average cell diameter, the average cell diameter of the surface area section and the average cell diameter of the inner area were measured as follows.

Specifically, a plane passing near the center of the expanded particles with a razor blade and the cut cross-sections were photographed enlarged at a magnification of 100 times using a scanning electron microscope (manufactured by JEOL Ltd., model: JSM-6360LV).

When photographing the images, images in which the surface area of the expanded particles is included as images for surface area section average cell diameter measurement and the images in which the central part of the expanded particles is included as images for inner area average cell diameter measurement were photographed.

The surface area of the expanded particles is referred to as the range of 50% of the radius from the outermost surface membrane and the central part of the expanded particles is referred to as the range of 50% of the radius from the center of the expanded particles.

Next, photographed images were printed on A4 sheets, one image per page, and one 5 straight lines 60 mm long were arbitrarily drawn on the images of the cut cross-section of the expanded particles. The average cell diameter of the surface area section and the average cell diameter of the inner area were calculated in accordance with the measurement method of the average cell diameter of the expanded particle. The average values when measured 5 times for each image were used as the average cell diameters for the surface area section average cell diameter and the inner area average cell diameter.

<Thermal Stability of Expandable Particles>

The thermal stability of the expandable particles was evaluated as follows.

50 g of the expandable particles on the seventh day of maturation was inserted into a 0.3 mm thick polyethylene bag and stored (heated) for 20 hours in a circulatory-type warm air constant temperature bath set at 40±2°C.

After heating, the expandable particles were pre-expanded to a bulk density of 0.025 g/$cm^3$ and the average cell diameter of the expanded particles was measured by the below-mentioned method.

On the other hand, it was measured similar to the expandable particles before heating, the average cell diameters before and after heating were compared, and the thermal stability (heat roughness) of the expandable particles was evaluated by the following standard.

Θ (no heat roughness): Difference between average cell diameters is within ±20 μm
O (almost no heat roughness): Difference between average cell diameters is within ±50 μm
Δ (there is little heat roughness): Difference between average cell diameters is within ±70 μm

x (there is heat roughness): Difference between average cell diameters exceeds 70 μm

<Bulk Density of Expanded Molded Article>

The bulk density of the expanded molded article was measured as follows.

A test piece of 10 cm x 10 cm x 5 cm (volume (d)) was cut out from the obtained expanded molded article. Subsequently, a weight (c) of the test piece of the expanded molded article was precisely weighed to 2 decimal places.

The bulk density was determined by the following formula from the obtained weight (c) of the expanded molded article and the volume (d) of the expanded molded article (d).

$$\text{Bulk density of expanded molded article } (g/cm^3) = (c)/(d)$$

<Molecular Weight of Expanded Molded Article>

Molecular weight means the polystyrene (PS)-converted average molecular weight measured using gel permeation chromatography (GPC) (internal standard method).

A 30 mg±3 mg sample was taken from the expanded molded article and this sample was dissolved in 4 mL of 0.1% by weight BHT (butylhydroxytoluene)-containing chloroform, the resultant solution was filtered with a non-aqueous-based 0.45 μm chromatodisc, and the obtained filtrate was measured using a chromatograph under the following conditions. The average molecular weight of the sample was determined from the calibration curve of standard polystyrene measured and created in advance.

- Measurement device: Tosoh HPLC (Pump: DP-8020, Autosampler: AS-8020, Detectors: UV-8020 and RI-8020)
- Column: GPC K-806L (ø8.0 x 300 mm, manufactured by Shodex) x 2
- Guard column: GPC K-LG (ø8.0 x 50 mm, manufactured by Shodex) x 1
- Number of tests: 2
- Measurement conditions: column temperature (40°C), mobile phase (chloroform), mobile phase flow rate (1.2 mL/min), pump temperature (room temperature), detector temperature (room temperature), measurement time (25 minutes), detection wavelength (UV 254 nm), injection amount (50 μL)
- Standard polystyrene for calibration curves: manufactured by Showa Denko K. K., Product name: "Shodex", weight-average molecular weight (Mw): 5,620,000, 3,120,000, 1,250,000, 442,000, 131,000, 54,000, 20,000, 7,590, 3,450, and 1,320

From the obtained weight-average molecular weight Mw and the Z-average molecular weight Mz was determined the ratio Mz/Mw thereof.

<Falling Ball Impact Value of Expanded Molded Article>

The falling ball impact strength was measured in accordance with the method described in JIS K7211: 1976 "General Principles of Falling Weight Impact Test Method for Rigid Plastic".

After the obtained expanded molded article was dried at a temperature of 50°C for 1 day, a test piece (6 surfaces having no skin) of 40 mm x 215 mm x 20 mm (thickness) was cut from this expanded molded article.

Subsequently, both ends of the test piece were fixed using clamps so that the space between fulcrums is 150 mm, a steel ball weighing 321 g was made to fall from a predetermined height onto the center portion of the test piece, and the presence/absence of breakage of the test piece was observed.

The test was conducted with the rigid ball falling height (test height) being changed at intervals of 5 cm from the minimum height for all of the 5 test pieces to be broken to the maximum height for none of the test pieces to be broken, and the falling ball impact value (cm), in other words, the 50% breaking height, was calculated from the following calculation formula.

$$H_{50} = H_i + d[\Sigma(i \cdot n_i)/N \pm 0.5]$$

The symbols in the formula mean the following.

$H_{50}$: 50% breaking height (cm)

$H_i$: Test height (cm) when the height level (i) is 0 and the height from which the test piece is expected to be broken
d: Height interval (cm) when the test height is elevated or lowered
i: Height level which increases or decreases one by one (i = ...-3, -2, -1, 0, 1, 2, 3...) with the height level at Hi being 0
$n_i$: Number of test pieces broken (or not broken) at each level, for which data of the greater number is used (if the numbers are the same, either may be used)
N: Total number ($N=\sum n_i$) of test pieces broken (or not broken) at each level, for which data of the greater number is used (if the numbers are the same, either may be used)
±0.5: A negative number is employed when data of broken test pieces is used and a positive number is employed when data of not-broken test pieces is used

The obtained falling ball impact value was evaluated by the following standard. A larger falling ball impact value shows larger impact resistance of the expanded molded article.

Θ (superior): Falling ball impact value of 13 cm or more
O (good): Falling ball impact value in the range of 11 cm or more and less than 13 cm
Δ (acceptable): Falling ball impact value in the range of 9 cm or more and less than 11 cm
x (unacceptable): Falling ball impact value of less than 9 cm

<Bending Fracture Point Displacement of Expanded Molded Article>

The bending strength was measured in accordance with the method described in JIS K7221-2: 1999 "Rigid Cellar Plastic-Bending Test-Section 2: Measurement of Bending Characteristics".
After the obtained expanded molded article was dried at a temperature of 50°C for 1 day, a test piece of 75 mm x 300 mm x 25 mm (thickness) (one surface has skin, pressurized from skin surface) was cut from this expanded molded article.
Subsequently, a pressing wedge 10R and a support base 10R were mounted on a universal tester (manufactured by Orientech Co., Ltd., Tensilon® UCT-10T) as distal end jigs, and a test piece was set at distance of 200 mm between fulcrums and a bend test was carried out under the conditions of a test (compression) rate of 10 mm/min. In this test, the fracture detection sensitivity was set at 0.5% and when the decrease thereof exceeds a set value 0.5% (deflection: 30 mm) compared to a directly-before load sampling point, the directly-before sampling point is measured as the bending fracture point displacement (mm), and the average of 3 tests was determined.
The test piece before testing was left for 16 hours in the state of 23±2°C and RH 50±5%, and the same state was used as the test environment.
The obtained bending fracture point displacement was evaluated by the following standard. A larger bending fracture point displacement shows larger resilience of the expanded molded article.

Θ (superior): Bending fracture point displacement of 28 mm or more
O (good): Bending fracture point displacement in the range of 25 mm or more and less than 28 mm
Δ (acceptable): Bending fracture point displacement in the range of 20 mm or more and less than 25 mm
x (unacceptable): Bending fracture point displacement of less than 20 mm

<Cracking Amount of Expanded Molded Article>

The cracking amount was measured in accordance with the method described in JIS Z0235: 1976 "Cushioning Materials for Packaging-Evaluation Test Method".
After the obtained expanded molded article was dried at a temperature of 50°C for 1 day, a sample piece 1 of 75 mm x 300 mm x 50 mm (thickness) was cut from this expanded molded article.
Subsequently, the sample piece 1 was lightly fixed on the center of the base of a drop impact test machine for cushioning materials (manufactured by Yoshida Seiki, CST-320S) so as not to move when impacted. As shown in Figure 1, a weight 2 of 13.5 kg was dropped from a height of 60 cm so as to impact roughly on the central portion in the length direction of the sample piece 1 and go over the entire surface in the width direction. Cracks 3 generated in the sample piece 1 at this time were observed and the cracking amount (%) was calculated by the following calculation formula.

$$S = H/T \times 100$$

The symbols in the formula mean the following.

S: Cracking amount (%)
H: Crack dimension (mm)
T: Thickness of test piece (mm)

The obtained cracking amount was evaluated by the following standard. A smaller the cracking amount shows larger impact resistance of the expanded molded article.

Θ (superior): Cracking amount of less than 45%
O (good): Cracking amount in the range of 45% or more and less than 50%
Δ (acceptable): Cracking amount in the range of 50% or more and less than 55%
x (unacceptable): Cracking amount of 55% or more

<Moldabilty of Expanded Molded Article>

The appearance of the expanded molded article was observed visually when the steam pressure setting was 0.06, 0.07, and 0.08 MPa, and the moldability of the expanded molded article was evaluated using the following standard.

Θ (superior): no melting on the surface of the molded article or no shrinkage of the molded article
O (good): very slight melting on the surface of the molded article or very slight shrinkage of the molded article
Δ (acceptable): melting on the surface of the molded article or shrinkage of the molded article, and an inferior appearance of the molded article (no effect on the impact resistance)

(Example 1)

(Production of Seed (Core PS) Particles)

40,000 g of water, 100 g of tribasic calcium phosphate as a suspension stabilizer, and 2 g of sodium dodecylbenzene sulfonate as an anionic surfactant were supplied to a polymerization vessel having an internal volume of 100 liters and equipped with a stirrer. After adding 40,000 g of styrene monomer, and 96 g of benzoyl peroxide and 28 g of t-butyl peroxybenzoate as polymerization initiators thereto while stirring, the resultant mixture was polymerized by raising the temperature to 90°C. Then, the reaction was maintained at this temperature for 6 hours and then further raised to 125°C. After 2 hours, the reaction was cooled to obtain polystyrene-based resin particles (A).

The aforementioned polystyrene-based resin particles (A) were sieved, and polystyrene-based resin particles (B) having a particle diameter of from 0.5 to 0.71 mm (average particle diameter $D_{50}$ = 0.66 mm) were used as seed particles in the next step of production.

(Production of Modified Cross-Linked Particles)

2,000 g of water, 500 g of the aforementioned polystyrene-based resin particles (B) as seed particles, 8 g of magnesium pyrophosphate as a suspension stabilizer, and 0.4 g of sodium dodecylbenzene sulfonate as an anionic surfactant were supplied to a polymerization vessel having an internal volume of 5 liters and equipped with a stirrer, and the temperature was raised to 75°C while stirring.

Next, after 200 g of butyl acrylate having dissolved therein 0.6 g of dicumyl peroxide as a polymerization initiator, 10 g of a polybutadiene-terminated acrylate (manufactured by Osaka Organic Chemical Industry Ltd., product name: BAC-45), and 10 g of ethylene glycol dimethacrylate (manufactured by Kyoeisha Chemical Co., Ltd., product name: LIGHT ESTER EG) was supplied to the aforementioned 5-liter polymerization vessel, such were absorbed into the seed particles. After maintaining such at 75°C for 60 minutes, the temperature was raised to 130°C and maintained thereat for 2 hours.

Subsequently, after the obtained reaction solution was cooled to 75°C, 200 g of styrene monomer having dissolved therein 7.0 g of benzoyl peroxide and 0.75 g of t-butyl peroxybenzoate as polymerization initiators was supplied to the aforementioned 5-liter polymerization vessel, the styrene monomer was absorbed into the seed particles and such was maintained at 75°C for 60 minutes to polymerize and obtain a reaction solution.

Then, the temperature of the reaction solution was raised from 75°C to 120°C over 180 minutes, and 1,100 g of styrene monomer was supplied in increments to the polymerization vessel over 160 minutes. Subsequently, after the temperature was raised to 120°C, the temperature was further raised to 140°C, and the reaction solution was then cooled after 2 hours to obtain modified cross-linked particles.

(Production of Expandable Particles)

Subsequently, 2,000 g of water, 2,000 g of the modified cross-linked particles, 8.0 g of magnesium pyrophosphate as a suspension stabilizer, and 0.4 g of sodium dodecyl benzenesulfonate were supplied to a different polymerization vessel having an internal volume of 5 liters and equipped with a stirrer, and the temperature was raised to 125°C while stirring.

Next, as a blowing agent, 160 g of pentane in which n-pentane/isopentane = 75/25 to 85/15 (gas type a: Cosmo Oil Co., Ltd, product name: Pentane) was fed under pressure into the aforementioned 5-liter polymerization vessel, and after maintaining thereat for 3 hours, the reaction was cooled until 27°C or less, the modified cross-linked particles were removed from the polymerization vessel, dried, and left for 7 days in a constant temperature room at 13°C to obtain expandable particles.

(Pre-Expansion of Expandable Particles)

Subsequently, with respect to 100 parts by mass of the expandable particles, 0.05 parts by mass of polyethylene glycol, 0.05 parts by mass of zinc stearate, 0.08 parts by mass of monoglyceride stearate, and 0.08 parts by mass of triglyceride hydroxystearate were evenly coated on the entire surface of the expandable particles. After treatment, the expandable particles were charged into an ambient pressure pre-expansion machine preheated by steam and steam set at about 0.02 MPa was introduced while stirring to pre-expand until a bulk expansion ratio of 50 in about 2 to 3 minutes.

(Production of Expanded Molded Article)

After pre-expansion, expanded particles that were matured for 24 hours at ambient temperature (23°C) were filled into the cavity of an expanded beads automatic molder (manufactured by Sekisui Machinery Co., Ltd., ACE-3SP) equipped with a molding cavity having a cuboid-shaped cavity with internal dimensions of 300 mm x 400 mm x 50 mm (thickness). After filling, steam heating and cooling were carried out under the following conditions, and then the expanded molded article was extracted from the molding cavity to obtain an expanded molded article having a bulk expansion ratio of 50 (bulk density of 0.020 g/$cm^3$).

(Molding Conditions) Molding cavity heating: 5 seconds
One-side heating: 10 seconds
Reverse one-side heating: 5 seconds
Both-side heating: 20 seconds
Water cooling: 10 seconds
Steam pressure setting: 0.07 MPa

In order to evaluate the moldability of the expanded molded article, expanded molded articles were produced using 0.06 MPa and 0.08 MPa as the steam pressure setting.

The physical properties of the obtained expanded molded articles were measured and evaluated. The results thereof are shown in Tables 1 and 2.

(Example 2)

In the pre-expansion of the expandable particles, other than making the 50 bulk expansion ratio 40, modified cross-linked particles, expandable particles, expanded particles, and an expanded molded article were obtained, and measured and evaluated in the same manner as Example 1. The results thereof are shown in Tables 1 and 2.

(Example 3)

In the production of the modified cross-linked particles, other than making the 10 g of ethylene glycol dimethacrylate 16 g (8.0 parts by mass with respect to 100 parts by mass of butyl polyacrylate), modified cross-linked particles, expandable particles, expanded particles, and an expanded molded article were obtained, and measured and evaluated in the same manner as Example 1. The results thereof are shown in Tables 1 and 2.

(Example 4)

In the pre-expansion of the expandable particles, other than making the 50 bulk expansion ratio 40, modified

cross-linked particles, expandable particles, expanded particles, and an expanded molded article were obtained, and measured and evaluated in the same manner as Example 3. The results thereof are shown in Tables 1 and 2.

(Example 5)

In the production of the modified cross-linked particles, other than making the 10 g of ethylene glycol dimethacrylate 13 g (6.5 parts by mass with respect to 100 parts by mass of butyl polyacrylate), modified cross-linked particles, expandable particles, expanded particles, and an expanded molded article were obtained, and measured and evaluated in the same manner as Example 1. The results thereof are shown in Tables 1 and 2.

(Example 6)

In the pre-expansion of the expandable particles, other than making the 50 bulk expansion ratio 40, modified cross-linked particles, expandable particles, expanded particles, and an expanded molded article were obtained, and measured and evaluated in the same manner as Example 5. The results thereof are shown in Tables 1 and 2.

(Example 7)

In the production of the modified cross-linked particles, other than making the 10 g of ethylene glycol dimethacrylate 7 g (3.5 parts by mass with respect to 100 parts by mass of butyl polyacrylate), modified cross-linked particles, expandable particles, expanded particles, and an expanded molded article were obtained, and measured and evaluated in the same manner as Example 1. The results thereof are shown in Tables 1 and 2.

(Example 8)

In the pre-expansion of the expandable particles, other than making the 50 bulk expansion ratio 40, modified cross-linked particles, expandable particles, expanded particles, and an expanded molded article were obtained, and measured and evaluated in the same manner as Example 7. The results thereof are shown in Tables 1 and 2.

(Example 9)

In the production of the modified cross-linked particles, other than using 6 g (3.0 parts by mass with respect to 100 parts by mass of butyl polyacrylate) of trimethylol propane trimethacrylate (manufactured by Kyoeisha Chemical Co., Ltd., product name: LIGHT ESTER TMP) instead of the 10 g of ethylene glycol dimethacrylate, modified cross-linked particles, expandable particles, expanded particles, and an expanded molded article were obtained, and measured and evaluated in the same manner as Example 1. The results thereof are shown in Tables 1 and 2.

(Example 10)

In the pre-expansion of the expandable particles, other than making the 50 bulk expansion ratio 40, modified cross-linked particles, expandable particles, expanded particles, and an expanded molded article were obtained, and measured and evaluated in the same manner as Example 9. The results thereof are shown in Tables 1 and 2. Also, the number of days of maturing and the heat stability of the expandable particles were measured and evaluated, and the results thereof are shown in Table 3.

(Example 11)

In the production of expandable particles, other than supplying 4 g (0.2 parts by mass with respect to 100 parts by mass of modified cross-linked particles) of 12-hydroxystearic acid amide (melting point of 108 to 111°C, manufactured by Nippon Kasei Chemical Co., Ltd, product name: DIAMID KH) as an ageing accelerator to the dispersion, modified cross-linked particles, expandable particles, expanded particles, and an expanded molded article were obtained, and measured and evaluated in the same manner as Example 10. The results thereof are shown in Tables 1 and 2. Also, the number of days of maturing and the heat stability of the expandable particles were measured and evaluated, and the results thereof are shown in Table 3.

(Comparative Example 1)

In the production of the modified cross-linked particles, other than not using 10 g of ethylene glycol dimethacrylate, modified cross-linked particles, expandable particles, expanded particles, and an expanded molded article were obtained, and measured and evaluated in the same manner as Example 1. The results thereof are shown in Tables 1 and 2.

(Comparative Example 2)

In the pre-expansion of the expandable particles, other than making the 50 bulk expansion ratio 40, modified cross-linked particles, expandable particles, expanded particles, and an expanded molded article were obtained, and measured and evaluated in the same manner as Comparative Example 1. The results thereof are shown in Tables 1 and 2.

(Comparative Example 3)

In the production of the modified cross-linked particles, other than not using 10 g of ethylene glycol dimethacrylate and not using 10 g of a polybutadiene-terminated acrylate (manufactured by Osaka Organic Chemical Industry Ltd., product name: BAC-45), modified cross-linked particles, expandable particles, expanded particles, and an expanded molded article were obtained, and measured and evaluated in the same manner as Example 1. The results thereof are shown in Tables 1 and 2.

(Comparative Example 4)

In the pre-expansion of the expandable particles, other than making the 50 bulk expansion ratio 40, modified cross-linked particles, expandable particles, expanded particles, and an expanded molded article were obtained, and measured and evaluated in the same manner as Comparative Example 3. The results thereof are shown in Tables 1 and 2.

Table 1

| | Raw Materials of Modified Cross-Linked Particles | | | | | Physical Properties of Modified Cross-Linked Particles | | | | Expandable Particles | |
|---|---|---|---|---|---|---|---|---|---|---|---|
| | Crosslinking Agent | Added Amount With Respect to 100 Parts by Mass of PAE Fine Particles (parts by mass) | AE | Core PS/AE/SM (parts by mass) | PBA Added Amount (parts by mass) | Average Particle Diameter (mm) | PAE Fine Particles Average Particle Diameter (nm) | Gel Component Degree of Swelling | Gel Component Fraction (% by mass) | Volatile Blowing Agent | Volatile Blowing Agent Content (% by mass) |
| Defined Scope of Claims | - | 1-10 | - | - | - | 0.3-2 | 30-1,000 | 10-20 | 5-25 | - | 2-10 |
| Example 1 | EGDMA | 5.0 | Butyl Acrylate | 25/10/65 | 0.5 | 1.08 | 320 | 12.5 | 16.7 | Pentane | 8 |
| Example 2 | | | | | | | | | | | |
| Example 3 | EGDMA | 8.0 | | | | 1.07 | 380 | 11.3 | 16.7 | | |
| Example 4 | | | | | | | | | | | |
| Example 5 | EGDMA | 6.5 | | | | 1.04 | 450 | 12.2 | 19.0 | | |
| Example 6 | | | | | | | | | | | |
| Example 7 | EGDMA | 3.5 | | | | 1.05 | 440 | 13.0 | 17.2 | | |
| Example 8 | | | | | | | | | | | |
| Example 9 | TMP | 3.0 | | | | 1.08 | 480 | 12.5 | 18.6 | | |
| Example 10 | | | | | | | | | | | |
| Example 11 | TMP | 3.0 | | | | 1.07 | 460 | 12.6 | 18.4 | | |
| Comparative Example 1 | - | - | | | | 1.05 | 480 | 9.9 | 4.9 | | |
| Comparative Example 2 | | | | | | | | | | | |
| Comparative Example 3 | - | - | | | 0.0 | 1.04 | 470 | 9.0 | 3.8 | | |

(continued)

| | Raw Materials of Modified Cross-Linked Particles | | | | | Physical Properties of Modified Cross-Linked Particles | | | | Expandable Particles | |
|---|---|---|---|---|---|---|---|---|---|---|---|
| | Crosslinking Agent | Added Amount With Respect to 100 Parts by Mass of PAE Fine Particles (parts by mass) | AE | Core PS/AE/SM (parts by mass) | PBA Added Amount (parts by mass) | Average Particle Diameter (mm) | PAE Fine Particles Average Particle Diameter (nm) | Gel Component Degree of Swelling | Gel Component Fraction (% by mass) | Volatile Blowing Agent | Volatile Blowing Agent Content (% by mass) |
| Comparative Example 4 | | | | | | | | | | | |

EGDMA: Ethylene glycol dimethacrylate
AE: Acrylic acid ester
SM: Styrene monomer
TMP: Trimethylol propane trimethacrylate Core
PS: Polystyrene as seed particles PBA: Polybutadiene-terminated acrylate
PAE: Polyacrylic acid ester

Table 2

| | Expandable Particles | | | | Expanded Molded Article | | | | | | | | |
|---|---|---|---|---|---|---|---|---|---|---|---|---|---|
| | Bulk Density ($g/cm^3$) | Mw (x $10^4$) | Mz/Mw | Average Cell Diameter (μm) | Bulk Density ($g/cm^3$) | Mw (x $10^4$) | Mz/Mw | Falling Ball Impact Value (cm) | Bending Fracture Point Displacement (mm) | Cracking Amount (%) | Moldability Steam Pressure Setting (MPa) | | |
| | | | | | | | | | | | 0.06 | 0.07 | 0.08 |
| Example 1 | 0.020 | 29.3 | 2.82 | 125 | 0.020 | 29.3 | 2.82 | 20.5 (Θ) | 28.9 (Θ) | 41.2 (Θ) | ○ | Θ | Θ |
| Example 2 | 0.025 | | | 121 | 0.025 | | | 24.5 (Θ) | 25.6 (○) | 39.8 (Θ) | ○ | Θ | Θ |
| Example 3 | 0.020 | 29.4 | 2.81 | 89 | 0.020 | 29.4 | 2.81 | 18.5 (Θ) | 26.0 (○) | 43.2 (Θ) | ○ | Θ | Θ |
| Example 4 | 0.025 | | | 81 | 0.025 | | | 20.5 (Θ) | 23.8 (Δ) | 40.9 (Θ) | ○ | Θ | Θ |
| Example 5 | 0.020 | 28.1 | 2.80 | 165 | 0.020 | 28.1 | 2.80 | 18.5 (Θ) | 25.1 (○) | 42.6 (Θ) | ○ | Θ | Θ |
| Example 6 | 0.025 | | | 139 | 0.025 | | | 21.5 (Θ) | 23.9 (Δ) | 40.2 (Θ) | ○ | Θ | Θ |
| Example 7 | 0.020 | 28.3 | 2.78 | 194 | 0.020 | 28.3 | 2.78 | 18.5 (Θ) | 28.4 (Θ) | 42.2 (Θ) | ○ | Θ | Θ |
| Example 8 | 0.025 | | | 122 | 0.025 | | | 21.5 (Θ) | 24.5 (Δ) | 41.8 (Θ) | ○ | Θ | Θ |
| Example 9 | 0.020 | 29.8 | 2.80 | 122 | 0.020 | 29.8 | 2.80 | 19.5 (Θ) | 33.0 (Θ) | 41.2 (Θ) | ○ | Θ | Θ |
| Example 10 | 0.025 | | | 122 | 0.025 | | | 21.5 (Θ) | 34.2 (Θ) | 39.1 (Θ) | ○ | Θ | Θ |
| Example 11 | 0.025 | 29.6 | 2.81 | 121 | 0.025 | 29.6 | 2.81 | 21.5 (Θ) | 34.4 (Θ) | 39.3 (○) | ○ | Θ | Θ |
| Comparative Example 1 | 0.020 | 28.4 | 2.79 | 103 | 0.020 | 28.4 | 2.79 | 16.5 (Θ) | 24.9 (Δ) | 43.9 (Θ) | ○ | Θ | Θ |
| Comparative Example 2 | 0.025 | | | 97 | 0.025 | | | 19.5 (Θ) | 23.1 (Δ) | 42.9 (Θ) | ○ | Θ | Θ |
| Comparative Example 3 | 0.020 | 28.0 | 2.71 | 125 | 0.020 | 28.0 | 2.71 | 15.5 (Θ) | 24.7 (Δ) | 45.9 (○) | ○ | Θ | Θ |
| Comparative Example 4 | 0.025 | | | 120 | 0.025 | | | 18.5 (Θ) | 21.0 (Δ) | 43.7 (Θ) | ○ | Θ | Θ |

Mw: Weight-average molecular weight
Mz: Z-average molecular weight

Table 3

| | Expandablele Particles Evaluation | |
|---|---|---|
| | Maturing Number of Days | Thermal Stability Evaluation |
| Example 10 | 7 days (Δ) | Δ |
| Example 11 | 5 days (Θ) | Θ |

It is understood from the results of Tables 1 and 2 that the modified cross-linked particles of Examples 1 to 11 are a polystyrene-based resin that can yield an expanded molded article having more superior impact resistance and that has good moldability.

On the other hand, it is understood that the modified particles of Comparative Examples 1 to 4 are inferior to the modified cross-linked particles of Examples 1 to 11. Also, from the results of Table 3, it is understood that, for the expandable particles of Example 11, the number of days of maturing is greatly reduced and heat roughness is difficult in high-temperature storage compared to the expandable particles of Example 10.

EXPLANATION OF SYMBOLS

1: Test piece
2: Weight
3: Crack
H: Crack dimension
T: Thickness of the test piece

## Claims

1. Modified polystyrene-based cross-linked resin particles in which polyacrylic acid ester-based resin fine particles having an average particle diameter in a range of 30 to 1,000 nm are dispersed in polystyrene-based resin particles, wherein a content of gel component fraction insoluble to toluene when about 1 g of said modified polystyrene-based cross-linked resin particles is dissolved in 50 ml of toluene at 25°C is in a range of from 5 to 25% by mass and the gel component shows a degree of swelling in a range of from 10 to 20 in toluene at 25°C.

2. The modified polystyrene-based cross-linked resin particles according to claim 1, wherein said modified polystyrene-based cross-linked resin particles include a component derived from a crosslinking agent and said crosslinking agent is an aliphatic di- or trimethacrylate.

3. The modified polystyrene-based cross-linked resin particles according to claim 2, wherein said crosslinking agent is ethylene glycol dimethacrylate or trimethylol propane trimethacrylate.

4. The modified polystyrene-based cross-linked resin particles according to claim 2, wherein said component derived from the crosslinking agent is included in a range of from 1 to 10 parts by mass with respect to 100 parts by mass of said polyacrylic acid ester-based resin fine particles.

5. The modified polystyrene-based cross-linked resin particles according to claim 1, wherein said content of gel component fraction insoluble to toluene is in a range of 10 to 25% by mass and said gel component shows a degree of swelling in a range of 15 to 20 in toluene at 25°C.

6. The modified polystyrene-based cross-linked resin particles according to claim 1, wherein said polyacrylic acid ester-based resin fine particles are formed from a polymer of ethyl acrylate, butyl acrylate, 2-ethylhexyl acrylate, or a mixture thereof.

7. The modified polystyrene-based cross-linked resin particles according to claim 1, wherein said polyacrylic acid ester-based resin fine particles have an average particle diameter in a range of 200 to 500 nm.

8. The modified polystyrene-based cross-linked resin particles according to claim 1, wherein said modified polystyrene cross-linked resin particles have an average particle diameter in a range of 0.3 to 2 mm.

9. Expandable particles comprising the modified polystyrene cross-linked resin particles according to claim 1 and a volatile blowing agent.

10. The expandable particles according to claim 9, wherein said volatile blowing agent is a volatile blowing agent having pentane as a main component and a content of said volatile blowing agent has a content in a range of 2 to 10% by mass of expandable polystyrene-based cross-linked resin particles.

11. The expandable particles according to claim 9 further comprising a hydroxy fatty acid amide as an ageing accelerant.

12. The expandable particles according to claim 11, wherein said hydroxy fatty acid amide is 12-hydroxystearic acid amide.

13. The expandable particles according to claim 11, wherein said hydroxy fatty acid amide is included in a proportion of from 0.01 to 0.50 parts by mass with respect to 100 parts by mass of a resin component of said modified polystyrene-based cross-linked resin particles.

14. Pre-expanded particles that are obtained by pre-expanding the expandable particles according to claim 9.

15. An expanded molded article that is obtained by expansion molding the pre-expanded particles according to claim 14, and that has a density in a range of 0.014 to 0.20 g/$cm^3$ and an average cell diameter in a range of 50 to 200 $\mu$m.

16. A method for producing the modified polystyrene-based cross-linked resin particles according to claim 2, the method comprising:

a step of, in an aqueous medium, after absorbing at least an acrylic acid ester-based monomer and a crosslinking agent into seed particles comprising a polystyrene-based resin, polymerizing said acrylic acid ester-based monomer to dispersion mold polyacrylic acid ester-based resin fine particles in said seed particles; and subsequently,
a step of, in said aqueous medium, after absorbing at least a styrene-based monomer into the particles in which said polyacrylic acid ester-based resin fine particles have been dispersion molded, polymerizing said styrene-based monomer to grow polystyrene-based cross-linked resin particles further.

17. A method for producing the expandable particles according to claim 9, the method comprising:

a step of, in an aqueous medium, after absorbing at least an acrylic acid ester-based monomer and a crosslinking agent into seed particles comprising a polystyrene-based resin, polymerizing said acrylic acid ester-based monomer to dispersion mold polyacrylic acid ester-based resin fine particles in said seed particles; subsequently
a step of, in said aqueous medium, after absorbing at least a styrene-based monomer into the particles in which said polyacrylic acid ester-based resin fine particles have been dispersion molded, polymerizing said styrene-based monomer to grow polystyrene-based cross-linked resin particles further; and
a step of impregnating a volatile blowing agent into said polystyrene-based cross-linked resin particles before or during said step of growing polystyrene-based resin particles further.

Figure 1

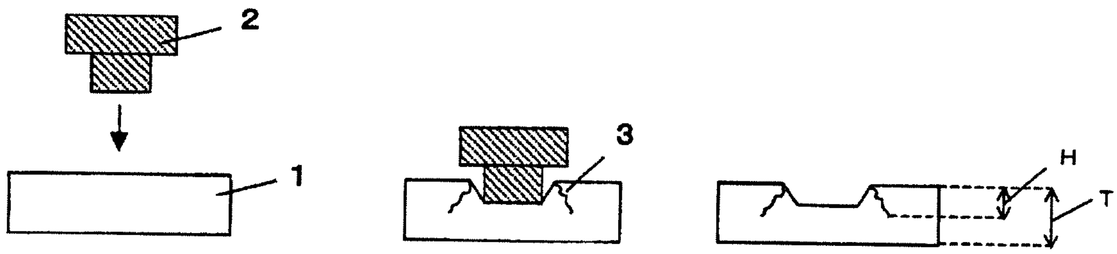

## INTERNATIONAL SEARCH REPORT

International application No.
PCT/JP2014/058251

A. CLASSIFICATION OF SUBJECT MATTER
*C08F257/00*(2006.01)i, *C08F2/44*(2006.01)i, *C08J9/18*(2006.01)i

According to International Patent Classification (IPC) or to both national classification and IPC

B. FIELDS SEARCHED

Minimum documentation searched (classification system followed by classification symbols)
C08F257/00, C08F2/44, C08J9/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | WO 2012/121084 A1 (Sekisui Plastics Co., Ltd.), 13 September 2012 (13.09.2012), claims; paragraphs [0017] to [0022], [0026] to [0027], [0036] to [0039]; examples 7, 10 & US 2013/310475 A1 & EP 2682420 A1 | 1-4,6-10, 14-17<br>11-13<br>5 |
| Y | JP 2013-32449 A (Sekisui Plastics Co., Ltd.), 14 February 2013 (14.02.2013), claims; paragraphs [0007] to [0010], [0014] to [0017], [0030]; examples (Family: none) | 11-13 |
| A | WO 2012/043792 A1 (Sekisui Plastics Co., Ltd.), 05 April 2012 (05.04.2012), claims; paragraphs [0018] to [0020], [0034] to [0037]; examples & EP 2623521 A1 & US 2013/184363 A1 | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>02 June, 2014 (02.06.14) | Date of mailing of the international search report<br>10 June, 2014 (10.06.14) |
| Name and mailing address of the ISA/<br>Japanese Patent Office<br><br>Facsimile No. | Authorized officer<br><br><br>Telephone No. |

Form PCT/ISA/210 (second sheet) (July 2009)

**INTERNATIONAL SEARCH REPORT**

International application No.
PCT/JP2014/058251

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-68817 A (Sekisui Plastics Co., Ltd.), 07 April 2011 (07.04.2011), claims; paragraphs [0022] to [0030]; examples (Family: none) | 1-17 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012043792 A
- WO 2012121084 A
- JP 2011068817 A
- JP 3462775 B